# EUROPEAN PATENT APPLICATION

(11) **EP 4 253 796 A1**
(43) Date of publication of application: **04.10.2023**
(21) Application number: 22165254.8
(22) Date of filing: 29.03.2022
(51) Int. Cl.: F16H 25/06, F03D 15/10, F16H 57/04

(54) **TRANSMISSION FOR A WIND TURBINE**

(71) Applicant: VESTAS WIND SYSTEMS A/S, 8200 Aarhus N (DK)
(72) Inventor: SCHRÖDER, Tim Niklas, Dortmund (DE); WIMMER, Thomas, Tauberrettersheim (DE); INGELI, Jan, Hattlingen (DE)
(74) Representative: Vestas Patents Department

(57) **Abstract**

A transmission which may find particular utility in wind turbine application, but may also be used in other applications. The transmission comprises a fixed gear ring, a first drive member rotationally supported within the fixed gear ring, the first drive member defining a plurality of radially arranged apertures each of which accommodates a tooth element, each tooth element having a tooth tip and a tooth base that are opposed along a tooth axis. The first drive member further comprises a radially outer face and a radially inner face, wherein the tooth tips of the tooth elements engage a corresponding tooth surface defined by the fixed gear ring. A second drive member, which is rotationally supported such that it extends within the first drive member, defines a cam profile which engages each of the plurality of tooth elements. The transmission further comprises one or more fluid distribution passages that extend through a wall of the second drive member and are configured to distribute lubricating fluid to the cam profile of the second drive member. Beneficially, the invention involves targeting specific points on and in the second drive member for lubrication by defining the lubrication passages internally within the second drive member. Structuring the second drive member in this way provides a convenient and mechanically elegant way of feeding lubrication oil directly to the parts that need it most.

## Description

### Technical Field

The present invention relates to a transmission in a powertrain assembly, particularly for a wind turbine.

### Background to the Invention

Wind turbines convert kinetic energy from the wind into electrical energy, using a large rotor with a number of rotor blades. A typical Horizontal Axis Wind Turbine (HAWT) comprises a tower, a nacelle on top of the tower, a rotor hub mounted to the nacelle and a plurality of wind turbine rotor blades coupled to the rotor hub. Depending on the direction of the wind, the nacelle and rotor blades are turned and directed into an optimal direction by a yaw system for rotating the nacelle and a pitch system for rotating the blades.

The nacelle houses many functional components of the wind turbine, including for example a main rotor shaft and one or more electrical generator, as well as convertor equipment for converting the mechanical energy at the rotor into electrical energy for provision to the grid. In some types of wind turbines, known as 'direct drive' systems, the main rotor shaft drives the electrical generator directly. However, it is more common for wind turbines to include a gearbox to step up the rotational speed between the main rotor shaft and the electrical generator, thus converting the low speed but high torque input from the main rotor shaft to a lower torque but higher speed input into the electrical generator. Together, the main rotor shaft, gearbox and generator constitute a power train of the wind turbine.

Typically, gearboxes for wind turbines include parallel gearboxes, epicyclic gearboxes, or a combination of both designs, and provide gear ratios between 1:30 and 1:140. Such high gear ratios usually require more than one gear stage which increases the size of the gearbox, and also its overall mass and cost. The mass of the gearbox contributes significantly to the overall mass of the nacelle, so it is desirable to reduce this mass to reduce the pendulum effect of the nacelle mass on top of the wind turbine tower which may reach over 100m in height, and even up to and over 160m in height.

Gear system designs with more compact layouts are known. One such gear system is known as a strain wave drive system or 'harmonic drive', and is well-known in small scale applications such as robotic joints and wheel motors. However, such systems are used as speed reducers and are generally not considered compatible as speed increasers due to issues with torque loading.

Another type of compact gear system is disclosed in US8656809B2 and US8256327B2, to Wittenstein Group. Such a gear system includes a speed reducer arrangement that features a plurality of circumferentially arranged teeth each of which is configured to move radially in a tooth carrier member. The bases of the teeth are driven by a rotatable cam member which constitutes an input drive, whilst the tips of the teeth engage on an outer ring with an inner tooth profile. The number of radially or slidably movable teeth differ from the number of teeth shapes in the ring tooth profile which causes the tooth carrier member to move at a slower rate than the input drive member. The tooth carrier member therefore constitutes an output drive member. Such 'radial-moving-teeth' gearbox designs are able to achieve a high-speed reduction ratio between 1:10 and 1:200.

Gear systems based on radial-moving-teeth designs generally are not reverse driven largely due to reduced efficiency when operated in the reverse driven direction. There are various technical challenges associated with configuring a radial-moving tooth design gearbox to be used as a speed increasing transmission, particularly in high torque applications, at least some of which the invention discussed herein is directed to address.

### Summary of the Invention

According to an aspect of the invention, there is provided a transmission comprising a fixed gear ring, a first drive member rotationally supported within the fixed gear ring, the first drive member defining a plurality of radially arranged apertures each of which accommodates a tooth element, each tooth element having a tooth tip and a tooth base that are opposed along a tooth axis. The first drive member further comprises a radially outer face and a radially inner face, wherein the tooth tips of the tooth elements engage a corresponding tooth surface defined by the fixed gear ring. A second drive member, which is rotationally supported such that it extends within the first drive member, defines a cam profile which engages each of the plurality of tooth elements, wherein rotation of the first drive member causes radial movement of the tooth elements by engagement with the fixed ring gear. The transmission further comprises one or more fluid distribution passages that extend through a wall of the second drive member and are configured to distribute lubricating fluid to the cam profile of the second drive member.

Beneficially, the invention involves targeting specific points on and in the second drive member for lubrication by defining the lubrication passages internally within the second drive member. Structuring the second drive member in this way provides a convenient and mechanically elegant way of feeding lubrication oil directly to the parts that need it most.

In one example, the transmission may form part of a speed increasing gearbox where rotation of the first drive member causes radial movement of the tooth elements by engagement with the fixed ring gear.

In another aspect, the examples of the invention provide a wind turbine including a tower on which is mounted a nacelle that supports a rotatable hub, wherein the rotatable hub is coupled to a transmission as defined above.

Preferred and/or optional features of the invention are set out in the appended claims.

### BRIEF DESCRIPTION OF THE DRAWINGS

The present invention will now be described, by way of example only, with reference to the attached drawings, in which:
Figure 1 is a perspective view of a horizontal-axis wind turbine within which the invention may be incorporated;
Figure 2 is a perspective view of a power transmission system for the wind turbine in Figure 1, which includes a main shaft, a gearbox or transmission, and an electrical generator;
Figure 3 is an exploded perspective view of the transmission of the system shown in Figure 2;
Figure 4 is a view transversely through the transmission showing the arrangement of main components;
Figures 5a-c are a series of views showing a gear tooth element of the transmission and an associated pivot/tilt pad;
Figures 6a-c are a series of views that show the progress of one of the gear tooth elements of the transmission during a load cycle;
Figures 7 and 8 are section views through respective portions of the transmission showing the configuration of a lubrication system;
Figure 9 is a schematic view of an output member of the transmission, which illustrates the role of the output member in the lubrication system;
Figure 10 is a further schematic view showing an alternative example of the lubrication system;
Figures 11 and 12 are views of further applications for a transmission according to the invention,
Figure 13 and Figures 14a, 14b show an alternative configuration of gear tooth element for use with a transmission in accordance with the invention.

### DETAILED DESCRIPTION

A specific embodiment of the present invention will now be described in which numerous features will be discussed in detail in order to provide a thorough understanding of the inventive concept as defined in the claims. However, it will be apparent to the skilled person that the invention may be put into effect without the specific details and that in some instances, well known methods, techniques and structures have not been described in detail in order not to obscure the invention unnecessarily.

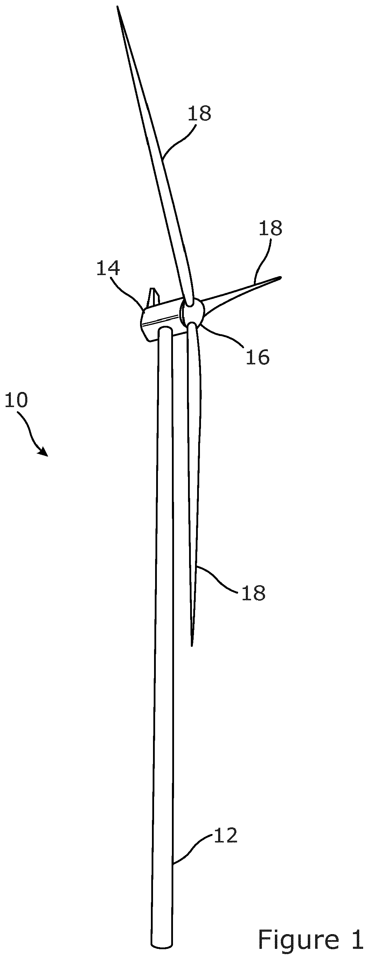

In order to place the embodiments of the invention in a suitable context, reference will firstly be made to Figure 1, which illustrates a typical Horizontal Axis Wind Turbine (HAWT) in which a generator rotor assembly according to an embodiment of the invention may be implemented. Although this particular image depicts an on-shore wind turbine, it will be understood that equivalent features will also be found on off-shore wind turbines. In addition, although the wind turbines are referred to as 'horizontal axis', it will be appreciated by the skilled person that for practical purposes, the axis is usually slightly inclined to prevent contact between the rotor blades and the wind turbine tower in the event of strong winds.

The wind turbine 10 comprises a tower 12, a nacelle 14 rotatably coupled to the top of the tower 12 by a yaw system (not shown), a rotor hub 16 mounted to the nacelle 14 and a plurality of wind turbine rotor blades 18 coupled to the rotor hub 16. The nacelle 14 and rotor blades 18 are turned and directed into the wind direction by the yaw system.

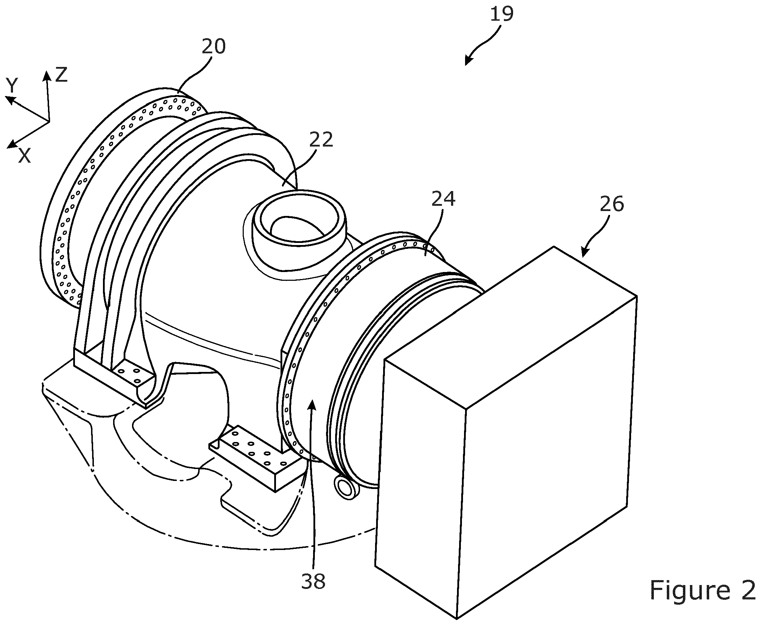

The nacelle 14 houses many functional components of the wind turbine, including the main rotor shaft, generator, gearbox, and power converter for converting the mechanical energy of the wind into electrical energy for provision to the grid. Together, these components are generally referred to as the powertrain of the wind turbine, whereas the gearbox and generator are generally referred to as the drivetrain. Figure 2 illustrates an example of a layout of part of a powertrain 19 within the nacelle 14, that layout including a main shaft 20, which extends through a main bearing housing 22, a gearbox 24 and a generator 26. The main shaft 20 is connected to, and driven by, the rotor hub 16 and provides input drive to the gearbox 24.

The gearbox 24 steps up the rotational speed of the low-speed main shaft via internal gears (not shown) and drives a gearbox output shaft (also not shown). The gearbox output shaft in turn drives the generator 26, which converts the rotation of the gearbox output shaft into electricity. The electricity generated by the generator 26 may then be converted by other components (not shown) as required before being supplied to an appropriate consumer, for example an electrical grid distribution system.

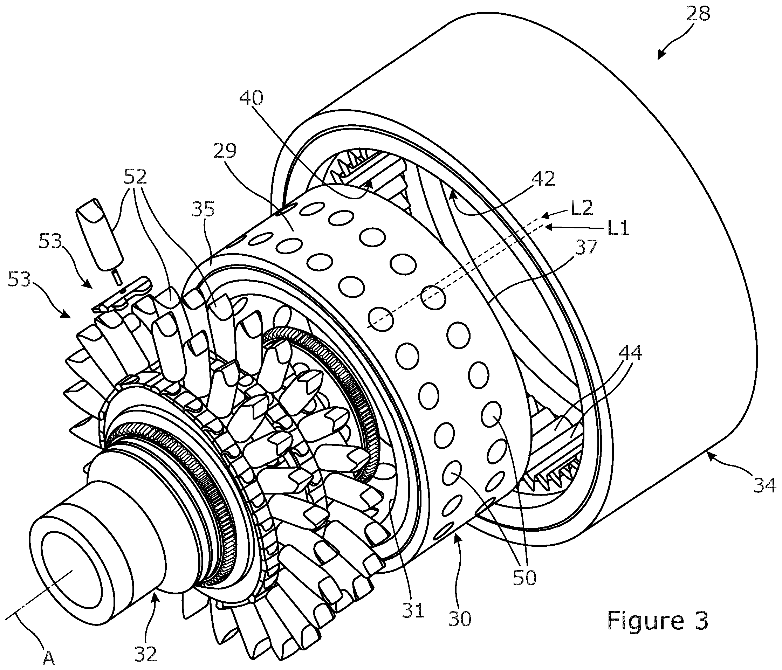

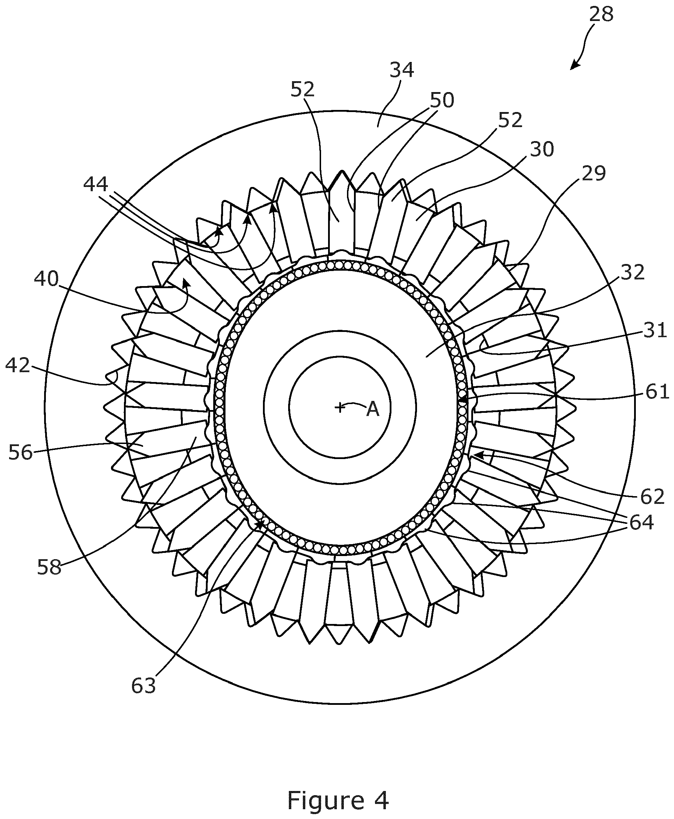

Aspects of the gearbox are shown in more detail in Figure 3 and Figure 4. Figure 3 illustrates the general arrangement of various components of the gearbox 24, as an exploded view, whilst Figure 4 shows the relative positioning of the internal components of the gearbox. Hereinafter, the gearbox components will be referred to generally as a transmission 28.

The transmission 28 comprises three main components: an input drive member 30, or 'tooth carrier', an output drive member 32, and an outer gear ring 34. The transmission 28 is configured to increase the speed of rotation between the input drive member 30 and the output drive member 32. In this context, the input drive member 30 would be coupled to the main rotor shaft 20 of the wind turbine, and the output drive member 32 would be coupled to a rotor of the electrical generator 26. The main components of the transmission as discussed above may be made of a suitable material, for example a suitable grade of cast or forged steel. In lower load applications, the components may be made from other materials such as suitable engineering plastics. The selection of the exact material for a particular application would be within the abilities of a skilled person.

At this point it should be noted that the general arrangement of the transmission is similar to the so-called "Galaxie" (RTM) drive system manufactured by Wittenstein Group. This type of system is sometimes referred to in the art as a 'radial-moving-tooth' or 'slidable tooth' design, and fundamentals of the technology are described in US8656809B2 and US8256327B2, amongst others. However, such drive systems tend to be used in speed reduction applications with lighter loading and with relatively short working lives, whereas in the current context the intention is for the transmission to be used in high loading applications as a speed increaser to convert the relatively high torque and low speed input drive from the main rotor of the wind turbine (approx. 5-15 rpm) to a lower torque but higher speed output drive for the gearbox (approximately 100-1000rpm). Moreover, in wind turbine applications, gearboxes tend to be in operation for longer time periods compared to other applications, for example usually wind turbines have a working life of 25 years.

Returning to Figure 3 and 4, the outer gear ring 34 is a rotationally fixed component which is associated with or formed as part of a main housing 38 (see in Figure 2) of the gearbox 24. Therefore, the outer gear ring 34 is in a rotationally fixed relation to the nacelle of the wind turbine.

The outer gear ring 34 is configured to define an internal gear profile 40 about its radial interior surface 42. The gear profile 40 extends circumferentially about the rotational axis of the transmission. The gear profile 40 is defined by a plurality of gear tooth sections 44 or more simply 'gear sections'.

It should be noted that the outer profile of each gear section 44 is shaped to define part of a logarithmic profile, which is a benefit in terms of force transmission with tooth members of the transmission, as will now be discussed. The precise tooth geometry is not the focus of the invention, however, and so further discussion will be omitted for clarity.

The input member 30 is configured to rotate within the space defined by the outer gear ring 34. Similarly, the output member 32 is rotationally supported such that it extends within or through the input member 30 so it is able to rotate therein.

The input member 30 is associated with and is physically connected to the main shaft of the wind turbine and so rotates at the same speed. It should be appreciated that the input member 30 is not shown connected to the main shaft in the drawings. However, the input member 30 comprises a set of bolt holes on its axial surface which serve to define a connecting interface for the main shaft, or to an intermediate coupling member to couple the input member 30 to the main shaft. It should be noted that the input member 30 could also be connected to the main shaft by way of a press fit connection such as a shrink disk.

The input member 30 is annular in form and defines a radially outer facing surface 29, a radially inward facing surface 31, and first and second axial facing surfaces, 35,37. The input member 30 is configured to define a circumferentially-spaced arrangement of apertures, bores or holes 50, each of which accommodates a respective gear tooth element 52. The apertures 50 therefore act as guides for the respective tooth elements 52 and so may be considered as guide bores. The radial depth/dimension of the apertures 50 are less than the axial length of the gear tooth element so that the tips of the gear tooth elements protrude from the top surface of the input member 30. It should be noted that only two of the gear tooth elements 52 and respective apertures 50 are labelled in Figure 4 so as not to obscure detail in the Figure. The precise number of gear tooth elements 52 and respective apertures 50 is not the subject of this invention and so will not be described in detail here. However, the number may vary between about 20 and 200. Moreover, the number of gear tooth elements and gear sections may be selected to vary the gear ratio between the input member 30 and the output member 32, and also to select the relative direction of rotation between the input member 30 and the output member 32.

As is known generally in the art, the input member 30 and the output member 32 may rotate in the same direction, albeit at different rotational speeds, or they may rotate in opposite directions, and the direction of rotation is determined by the relative number of gear tooth elements 52 in the input member 30 and the number of gear sections 44 in the outer gear ring 34. Reference is made to US10830328 which discusses more details relating to the interrelation between the number of gear sections 44 and the number of slidable tooth elements 52.

The input member 30 may be configured to have a single row of apertures 50 and gear tooth elements 52. However, in the illustrated example the input member 30 has two rows 53 of apertures 50 and gear tooth elements 52, spaced appropriately along the axial direction of the transmission. Further rows are possible, although not currently envisaged. In this context, the discussion above about the numbers of teeth in a row, would apply to each row. Note that the rotational axis of the transmission is indicated in Figures 3 and 4 as 'A'. This axis preferably coincides with the axis Y in Figure 2.

As shown in Figure 3, each row of apertures 50 is spaced circumferentially about the input member 30 in an angularly equi-spaced relationship. The angular interval between apertures 50 in the rows is the same for each row in the illustrated embodiment, and may be between 2 and 20 degrees, for example, depending on the number of tooth elements. However, in theory there may be different numbers of apertures 50, and therefore tooth elements 52, in each row. In the illustrated example, where there are equal numbers of apertures 50 and tooth elements 52 in the rows, the apertures 50 in one row are angularly shifted from the apertures 50 in the other one of the rows. This can be appreciated by observing the line L1 which is taken through the centre of one of the apertures 50 in one of the rows, and line L2 which is taken through the centre of the nearest aperture 50 in the other row. As can be seen, there is a small angular shift between the apertures 50 in the two rows. The angular shift may be up to 50% of the angular interval between adjacent apertures 50. For example, the angular shift may be 5% or 10% or 20% or 30% or 40% of the angular interval between a neighbouring two apertures 50 in a particular row. For example, for a row with 30 apertures, the angular interval would be 12 degrees. The angular shift between apertures in adjacent rows may therefore be up to 6 degrees.

The rotating action of the input member 30 causes the respective gear tooth elements 52 to be driven radially inwardly by the gear profile 40 since they are slidable within the apertures 50. Since the number of gear tooth elements 52 does not match the number of gear sections 44 of the gear profile 40, the result is that each of the gear tooth elements 52 is at a different radial lift height within its respective aperture 50. This imparts a wavelike pattern of motion of the gear tooth elements 52 which in turn imparts a rotational drive force to the output member 32, as will now be described.

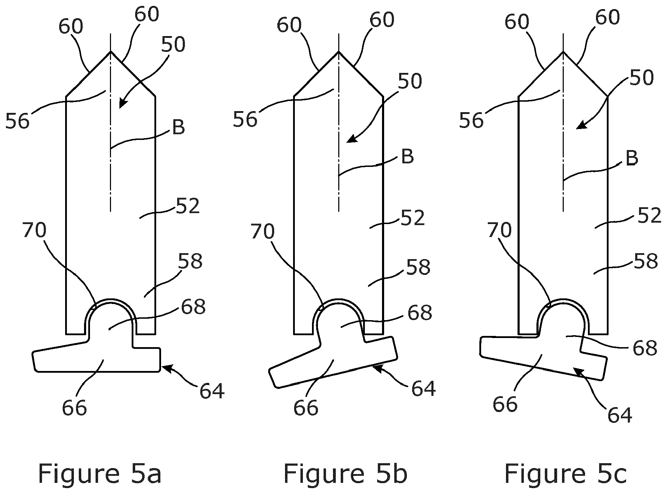

Referring to the gear tooth elements 52 in more detail, and also with reference to Figures 5a-c, it will be seen that each gear tooth element 52 includes a tooth tip region 56 and a tooth base region 58, both of which are aligned on a tooth axis B. The tooth tip region 56 is positioned radially outwardly with respect to the tooth base region 58. Although not seen clearly in Figure 3 and 4, it should be appreciated that the shape of the tooth tip region 56 is configured to compliment the shape of the respective gear section 44 of the outer ring gear 34. Each flank 60 of a tooth tip region 56 may be shaped to define a substantially flat surface, in the illustrated example, although in other examples the flanks may define a part of a logarithmic spiral or have some degree of curvature.

Whereas the tooth tip regions 56 of the gear tooth elements 52 engage with the gear profile 40 of the outer ring member 34, the tooth base regions 58 of the gear tooth elements 52 engage with the output member 32.

As can be seen in Figure 4 particularly well, the output member 32 has a non-circular shaped circumferential outer surface 61. More specifically the shape is oval in the illustrated example. The output member 32 is therefore cam-shaped in form so as to provide a shaft cam drive with two cam peaks, in this example. Other examples may provide a single cam peak or more than two cam peaks. It is the eccentric shape of the output drive member 32 that allows the gear tooth elements 52 to drive it with a rotational motion.

In order to reduce friction between the gear tooth elements 52 and the output drive member 32, there is provided a bearing arrangement 62.

The bearing arrangement 62 comprises a plurality of pivot pads 64, only some of which are labelled in Figure 4. Each of the pivot pads 64 is associated with a respective one of the gear tooth elements 52 and acts as a fulcrum against which bears a respective base region 58 of a gear tooth element 52. The gear tooth elements 52 therefore engage the cam surface of the output member 52 to transmit a force thereto thereby acting on and driving the output member. However, the tooth element 52 act on the cam surface indirectly in this example by bearing against the pivot pads 64, although the term 'engage', 'act on' and 'driven by' in this context are considers to cover both direct engagement and also indirect engagement via the pivot pads or other functionally equivalent bearing type element.

The action of a pivot pad 64 is shown schematically in Figures 5a-c. As can be seen the pivot pad 64 includes a pad portion 66 and a pivot or fulcrum portion 68. The pivot portion 68 protrudes upwardly from the pad portion 66 and is shaped to complement a recess 70 defined in the underside of the base region 58 of the gear tooth element 52. The pivot portion 68 may define a part-spherical or part-cylindrical protrusion. The precise geometry is not crucial to the Invention but it should allow the pivot pad 64 to pivot smoothly with respect to the gear tooth element 52, as can be seen in the Figures, in which Figure 5a shows the pivot pad 64 in a neutral position, and Figure 5b and 5c show the pivot pad 64 tilted to the left and to the right, respectively. Note also that in these Figures the fulcrum portion 68 is in an off-centre position on the pad portion 66 so that the pad portion 66 extends unequally on each side of the fulcrum portion 68. That is, the length of the pad portion 66 on one side of the fulcrum portion 68 is longer than the pad portion 66 on the other side, as seen in the Figures. The pad portion 66 can therefore be considered to be asymmetric about the tooth axis B. However, this is not essential and as such in other examples the fulcrum portion 68 may be centred on the pad portion 66 such that the pad portion 66 extends an equal length away from the fulcrum portion 68 in opposite directions. In such examples, the pad portion 66 can therefore be considered to be symmetric about the tooth axis B.

The pivot pads 64 are arranged to extend about the circumferential outer surface of the output member 32. Each pivot pad 64 is associated with a respective gear tooth element 52. Since the pivot pads 64 slide on the outer surface of the output member 32, a suitable means may preferably be provided to aid lubrication between those components. This may be fulfilled by a low friction coating on the underside of the pivot pads 64 and/or a low friction coating on the outer surface of the output member 32. Alternatively, the pivot pads 64 may be mounted on a suitable sliding bearing or roller bearing train 63 (c.f. Figure 4), for example. Any suitable bearing train would be acceptable, for example ball bearing, roller bearings or needle bearings, although it should be noted that such bearings are optional. The pivot pads 64 may be suitably coupled to one other. In other examples, the pivot pads 64 may be uncoupled to one another. To constrain the pivot pads from moving about on the output drive member 32 in the axial direction, the pivot pads 64 may be received in a shallow guide channel (not shown) defined in the outer surface of the output member 32, or other functionally similar arrangement.

The benefit of the pivot pads is that they transmit the linear driving force vectors generated by the individual tooth elements more effectively into the cam-like surface of the output member 32 as that surface undulates beneath the pivot pad 64.

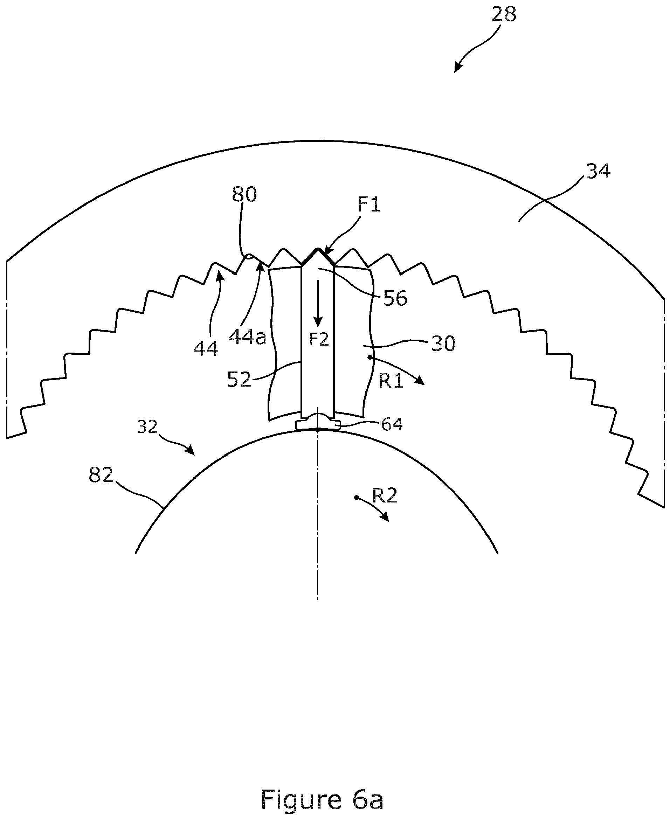

By way of further explanation, Figures 6a to 6c are a sequence of drawings that illustrates a short rotational phase of the input member 30 and the output member 32. In these Figures, only a single one of the gear tooth elements 52 are shown for the sake of clarity. However, from viewing Figures 6a to 6c, the relative movement of the input member 30 and the gear tooth element 52 is apparent, as is the effect that the force applied to the gear tooth element 52 has on the output member 32.

Referring firstly to Figure 6a, this can be considered a reference position at the start of a tooth loading cycle where the tip region 56 of the gear tooth element 52 is located in a trough 44a of a gear tooth section 44. It should be noted that the outer ring gear 34 is stationary, whilst the input member 30 and the output member 32 rotate relative to it, but at different rotational speeds. The direction of rotation of the input drive member 30 is labelled as R1 in Figure 6a, and can be seen as being clockwise in this example. Similarly, the direction of rotation of the output member 32 is labelled as R2, and is also clockwise, in this example. As noted above, the input and output members 30,32 may be configured to rotate in opposite directions in some examples.

At this point, it will be noticed that although a single gear tooth element 52 is shown, the input drive member 30 is shown in partial form for clarity. The movement of the input drive member 30 can be appreciated by the movement of the gear tooth element 52 relative to the outer gear ring 34 by comparing the position of the gear tooth element 52 with the gear section 44 with which it is engaged in Figures 6a-6c. Notably, in Figure 6a the output member 32 is in a rotational position at which the height of the cam peak is at a maximum. The cam shape provided by the output member 32 can therefore be considered as in a top dead centre position in Figure 6a.

As the input member 30 is driven in a clockwise direction, a force will be exerted on the tip region 56 of the gear tooth element 52 by a rising flank 80 of the gear tooth section 44. This force is shown on Figure 6a as F1. A component of force F1 will be in the vertically downwards direction (in the orientation of the drawings), and is shown here as F2. The gear tooth element 52 will therefore start to exert a force on the cam shaped surface of the output drive member 32 via the pivot pad 64 as the output member 32 rotates, and as the gear tooth element 52 passes the top position as shown in Figure 6a.

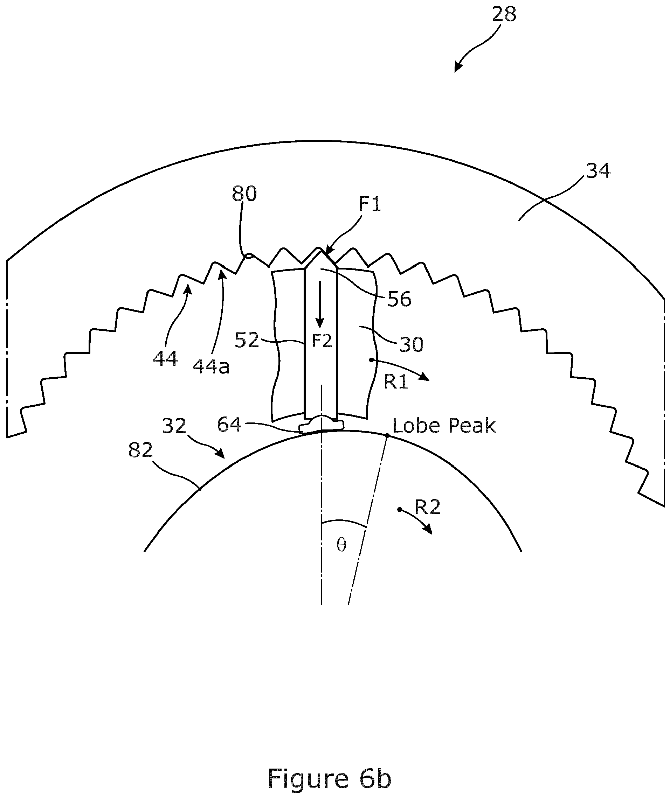

Comparing Figure 6b with Figure 6a, it will be seen in Figure 6b that the output member 32 has rotated in the clockwise direction by an angle θ of about 30 degrees. Conversely, the gear tooth element 52 has only moved relative to the outer ring member 34 by a small fraction of a degree, which illustrates the speed increasing configuration of the transmission 28.

As can be seen, the cam shape of the output member 32 has changed position in Figure 6b such that the vertical force F2 applied by the gear tooth element 52 via the pivot pad 64 now acts on a falling slope 82 of the cam shape. The gear tooth element 52, therefore contributes a rotational force to the output member 32, which combines with the forces generated by the other gear tooth elements to drive the output member 32 in rotation.

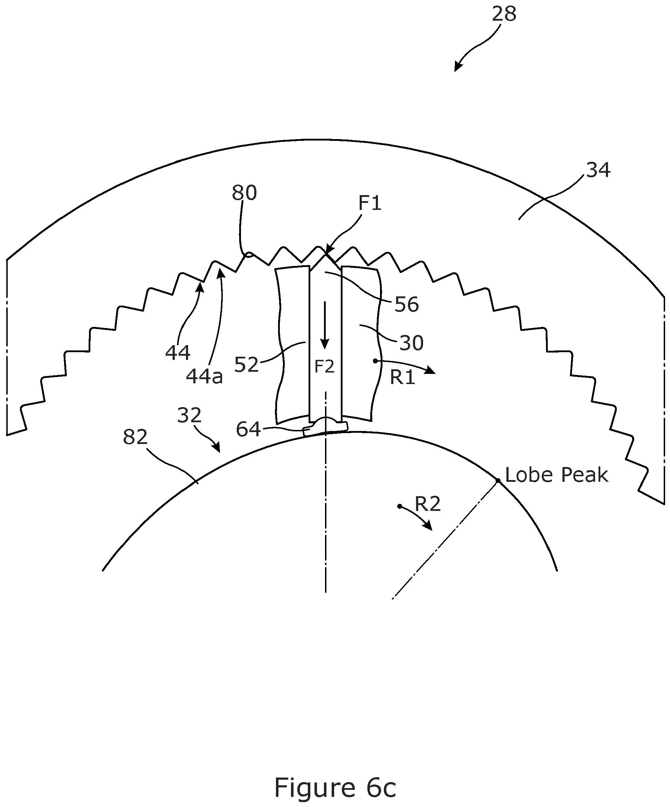

Figure 6c is substantially the same as Figures 6a and 6b, although it shows the gear tooth element 52 a step further along its loading cycle. Once the gear tooth element 52 has gone through a load cycle, as shown, it is driven outwardly by the cam surface of the output member 32 and is not loaded during this movement.

Having described the general arrangement of the transmission 28, the discussion will now focus on various aspects associated with lubrication of the moving parts of the transmission 28.

The transmission of the invention is suitable for use in high load applications such as main gearboxes for wind turbines. Whereas lubrication for such sliding tooth design gearboxes is not so crucial for small-scale and low load applications, high torque applications as would be generated by wind turbine main shafts where torque levels are in the high kilonewton or meganewton scale, sufficient lubrication becomes critical for reliable operation of the transmission.

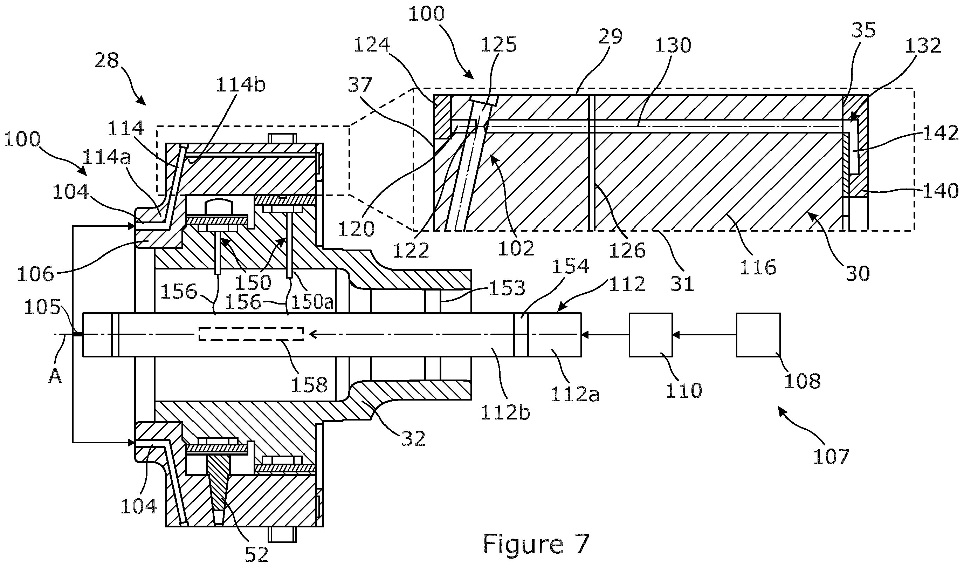

With this in mind, Figures 7 to 10 illustrate various features of the transmission 28 which relate to a lubrication system.

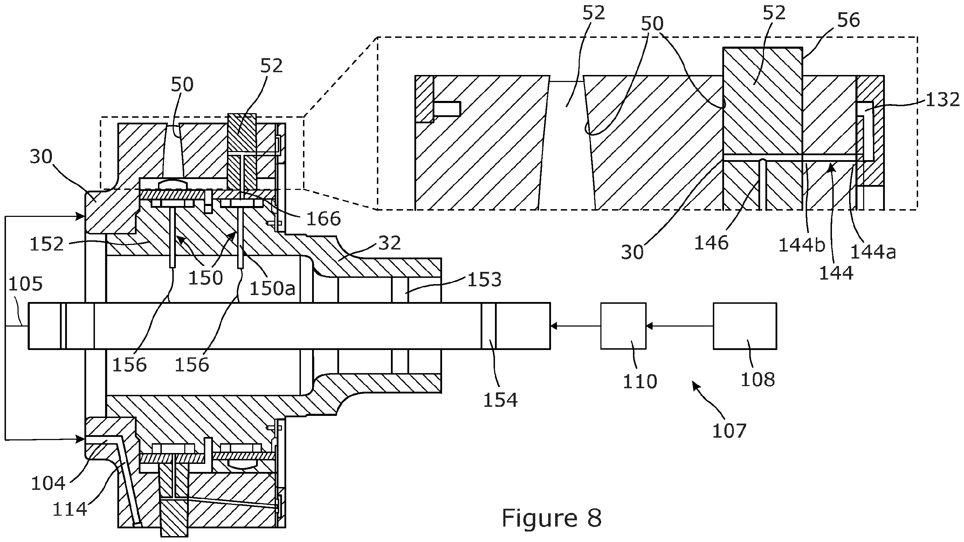

Referring firstly to Figures 7 and 8, it should be noted that these Figures show different sections through the transmission 28 taken along the rotational axis A in different angular planes so that different detail of the transmission 28 can be appreciated more fully. The outer gear ring 34 has been omitted for clarity.

The transmission 28 comprises a lubrication system 100. That lubrication system 100 includes a network 102 of fluid passages, channels or pathways being configured to provide lubrication oil to various contacting surfaces of the transmission, for example between the radial outer surface of the output member 32 and the pivot pads 64, and between the radially outer surface of the input member 30 and the outer ring gear 34 (not shown), and to the tooth apertures 50 of the input member 30.

The lubrication network 102 comprises fluid passages provided in the input member 30. As can be seen in Figure 7, the lubrication network 102 includes one or more fluid inlets 104 defined in a hub portion 106 of the input member 30. Although two fluid inlets are shown in Figure 7, more fluid inputs may be provided in the hub portion 106. Currently it is envisaged that four fluid inlets will be provided, those inlets preferable being spaced in an angularly equi-spaced relationship.

The fluid inlets 104 are supplied with lubrication fluid through a supply pipe 105 from a suitable fluid supply system 107. This may include a fluid reservoir or tank 108 and a fluid pump 110, and these are shown schematically in Figure 7. A rotary union or coupling 112 may be provided to transition the fluid supply from a stationary reference frame of the tank 108 and pump 110, to a rotational reference frame of the input member 30. Details of the rotary coupling 112 are not the main focus of the invention so will not be described here for clarity. Moreover, it is considered within the ambit of a skilled person to configure a suitable rotary coupling, which are known generally in the art.

With reference to the fluid inlets 104 that can be seen in Figure 7, it will be appreciated that the fluid inlets 104 connect respectively to intermediate passages 114 that radiate outwardly into an outer portion 116 of the input member 30. The outer portion 116 is positioned radially outwards of the hub portion 106, and so the intermediate passages extend at least partly in a radial direction. Here, the fluid inlets 104 are shown as extending in an axial direction through the input member 30 and, more specifically, through the hub portion 106. Axially-extending fluid inlets 104 provide a convenient means to connect the rotary coupling 112 to the radially extending passages within the input member 30.

Each of the intermediate passages 114 has a proximal end 114a at the axially-extending inlet passage 104 and a distal end 114b that is connected to a first fluid distribution gallery or manifold 120. It should be noted that the fluid distribution gallery 120 extends circumferentially about the inlet member 30, and specifically in the outer portion 116 thereof. In this example, the fluid distribution gallery 120 is defined at least in part by a circumferential groove or channel 122 in an axial face of the input member and is closed off by a closure plate 124. The circumferential channel 122 extends circumferentially around at least a portion of the input member 30. This configuration provides a convenient means to form the fluid distribution gallery 120 in the input member 30.

The fluid distribution gallery 120 provides a volume from which lubrication fluid can be fed to multiple locations of the transmission. Some of these will now be described.

As can be seen in Figure 7, a first feed passage 125 extends from the fluid distribution gallery 120 to the radially outer surface 29 of the input member 30. This may serve the purpose of providing lubrication oil to the contact between the outer gear ring 34 and the tips of the gear tooth elements 52. Additionally, the passage 125 enables the drilling of the passage 114. If the passage 125 is not required, it may be blocked with a suitable sealing plug, not shown.

Second feed passages 126 may also be provided that extend from the fluid distribution gallery 120, or from another feed passage, as shown here, to the radially inward surface 31 of the input member 30, the purpose of which may be to allow lubrication oil to be fed to the outer circumference surface of the output member 32.

In addition to the first and second feed passages 125,126, the lubrication network 102 also includes passages to feed lubrication fluid directly to the gear tooth elements 52. More specifically, the passages feed lubrication fluid to the gear tooth apertures 50 within which the gear tooth elements 52 reciprocate. In this respect, a further feed passage 130 extends from the first fluid distribution gallery 120 to a second fluid distribution gallery 132. The second fluid distribution gallery 132 is located on the opposite side of the input member 30 as the first fluid distribution gallery 120.

In this configuration, the second fluid distribution gallery 132 is also defined on an axially facing surface 134 of the input member 30 and, more specifically, the outer portion 116 of the input member 30. Here, the second fluid distribution gallery 132 extends circumferentially around the input member and so is circular in shape, when being viewed from an axial direction. In this example, the second fluid distribution gallery 132 is defined by a ring-shaped gallery plate 140 which is attached to the axial face 134 of the input member 30. The gallery plate 140 defines an annular channel 142. The annular channel 142 defines the volume for the second fluid distribution gallery 132 together with the adjacent axial surface 134 of the input member 30.

The gear tooth apertures 50 are fed with lubrication fluid from the second fluid distribution gallery 132 via respective fourth feed passages 144. As can be seen in Figure 8, the fourth feed passages 144 extend from the second fluid distribution gallery 132. The fourth feed passages 144 have a first end 144a in communication with the second fluid distribution gallery 132 and a second end 144b in communication with a gear tooth aperture 50. By virtue of this configuration, lubrication fluid can be fed from the fluid inlets 104, to the first fluid gallery 120 via the intermediate passage 114, and from there to the second fluid distribution gallery 132 via the third feed passage 130. From the second fluid distribution gallery 132, fluid can be fed to the gear tooth apertures 50 via the fourth feed passage 144.

It should be noted that there may be a fourth feed passage 144 for each one of the respective gear tooth apertures 50. It should also be noted that the fourth feed passages 144 are provided to feed both rows of gear tooth apertures 50, although this cannot be seen clearly in Figure 8.

Optionally, the gear tooth elements 52 may be configured specifically to make most efficient use of the lubrication fluid that is delivered to the gear tooth apertures 50. The internal configuration/structure of a representative one of the gear tooth elements 52 can be seen in Figure 8 and includes internal fluid lubrication passages 146. The internal lubrication passages permit transport of lubrication fluid through the gear tooth element 52 and between different parts of the gear tooth element 52. More specifically, the illustrated gear tooth element 52 comprises a first lubrication port 148 at a first axial position, and a second lubrication port (not shown) at a second axial position. The second lubrication port (not shown) is in a lower position on the gear tooth element 52 as compared to the first lubrication port 148, which is nearer to the tip region 56.

Whereas the aspects of the lubrication network 102 discussed above have focussed on the passages that extend through the input member 30, it should be appreciated that fluid lubrication passages are also provided in the output member 32.

As can be seen in Figures 7 and 8, the output member 32 comprises at least one fluid lubrication passage 150. In the illustrated example, two lubrication passages 150 are shown in the section view of Figure 7, and a further two lubrication passages 150 are shown in the section view of Figure 8. In principle the number of lubrication passages 150 provided within the output member 32 can be varied in dependence on the lubrication requirement.

The lubrication passages 150 extend radially through a wall 152 of the output member 32 and are shown here as radiating in an outwards direction relative to the rotational axis A.

It should be appreciated that in the illustrated examples the lubrication passages 150 extend perpendicularly to the rotational axis A, but they could instead be configured to have an axial direction component, i.e. to extend through the output member 32 in a diagonal direction.

The lubrication passages 150 may be formed in any suitable way. For example, they may be formed as drillings in the wall 152 of the output member 32 such that the lubrication fluid flows directly through the drillings. Alternatively, the lubrication passages 150 may be formed by pipes that extend through drillings.

The lubrication passages 150 are provided with lubrication fluid by the rotary coupling 112. Here the rotary coupling 112 is shown as extending through the output member 32, which is in the form of a hollow shaft, along the rotational axis A. The rotary coupling 112 in the illustrated example is in the form of an elongated tube and is supported in its position along the rotational axis A by a suitable support system 153. The support system 153 is shown here in schematic form but may be realised in various ways in order to support the rotary coupling 112 within the output member 32.

The rotary coupling 112 includes a first coupling portion 112a and a second coupling portion 112b. The first coupling portion 112a is in a stationary reference frame with respect to the output drive member 32. The second coupling portion 112b is in a rotating reference frame, and rotates with the output member 32. A bearing 154 connects the two coupling portions 112a,112b and provides a rotating interface to permit lubrication fluid to pass between the coupling portions 112a, 112b.

The second coupling portion 112b therefore provides a reservoir of lubricating fluid in a rotating reference frame from which that fluid can be supplied to rotating parts of the output member 32.

To connect the fluid lubrication passages 150 defined by the output member 32 to the rotating coupling 112, respective hose connections 156 are provided. The hose connections 156 as shown here as flexible hoses which can absorb any eccentric rotational movement between the output member 32 and the rotating coupling 112. Rigid hose connectors could also be provided. As shown here, the hose connections 156 are connected between radially inward ends 150a of the fluid lubrication passages 150 and the second coupling portion 112b of the rotary coupling 112. In turn, the hose connections 156 are connected to a fluid reservoir 158 provided in the second coupling portion 112b. Advantageously, the fluid reservoir 158 in the rotating coupling provides a volume of lubrication fluid to maintain supply in the event there is a problem with the pump 110. In other examples, rigid connectors could extend between the passages 150, which may be formed as plain drillings or bores in the output member 32, and to the rotary coupling 112.

In order to provide a balanced flow of lubricating fluid about the eccentric cam surface 61 of the output member 32, preferably a plurality of such lubrication passages 150 are distributed circumferentially about the cam surface 61.

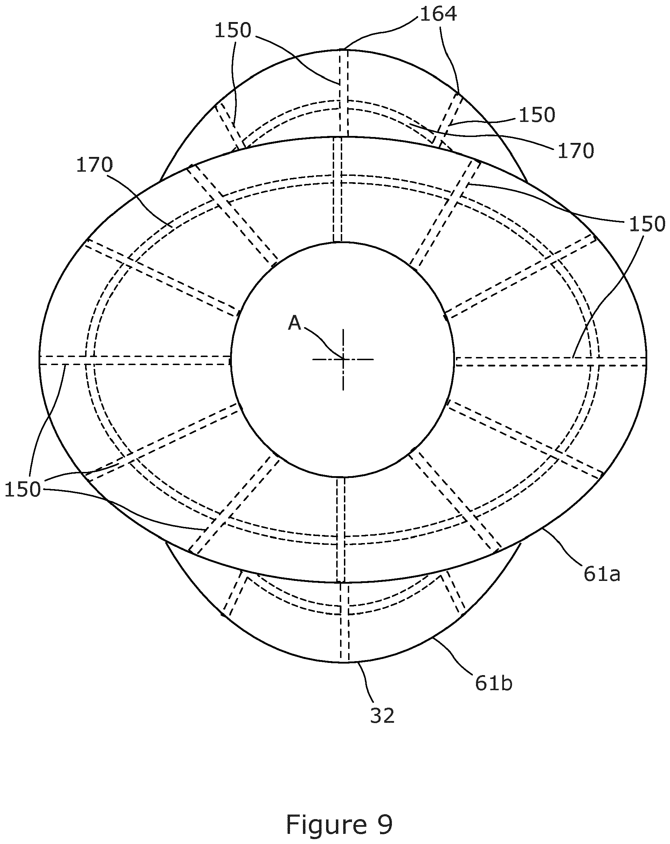

This is illustrated more clearly, although schematically, in Figure 9, which shows an end view of the output member 32 viewed along the rotational axis A of the transmission, thereby illustrating first and second adjacent cam surfaces 61a,61b of the output member 32. Note that the ovalisation, or non-circularity, of the cam surfaces 61a,61b are exaggerated for clarity. Each of the adjacent cam surfaces 61a,61b is provided with a respective plurality of lubrication passages 150. Those lubrication passages 150 may be distributed with equal angular intervals. However, in other examples the angular intervals between the lubrication passages may be unequal. Twelve lubrication passages 150 are shown in the example of Figure 9, for each of the cam surfaces 61a,61b although it should be appreciated that this is exemplary and other numbers of passages are envisaged.

Where the lubrication passages 150 penetrate through to or open out at the cam surfaces 61a,61b, those passages define respective outlet ports 164, only some of which are labelled for clarity. In terms of the density of those outlet ports 164 and their associated lubrication passages 150, in one example there may be two or more outlet ports 164 for each 90 degree radial quadrant of each respective cam surface 61a,61b. A total of four or more lubrication passages 150 are thought to be effective at providing useful lubrication all around the cam surfaces 61a,61b.

The lubrication passages 150 may all have the same diameter so as to provide the same or similar flow rate through each passage. In other examples, the diameters of the passages may vary. For example, it may be preferable to increase the flow rate through some of the passages compared to other ones of the passages. In a non-limiting example, it may be advantageous to configure the lubrication passages 150 that open at parts of the cam surface 61a,61b which are associated with a load bearing portion of travel of the tooth element 52 to have a higher flow rate compared to other ones of the lubrication passages 150. This would help ensure that the highly loaded parts of the cam surfaces 61a,61b are provided with a greater proportion of lubricating fluid. In this context, a load bearing portion of the cam surface can be considered to be the parts of the cam surfaces 61a,61b that either drive against or are driven by the tooth elements 52, in use.

Similarly, where the angular spacing of the lubrication passages 150 is not equal, as discussed above, then the angular interval between passages 150 may be smaller where the cam surfaces 61a,61b experienced higher loading with the tooth elements 52.

Since the pivot pads 64 slide over the eccentric cam surfaces 61a,61b, the lubrication passages 150 provide lubrication fluid directly to the sliding interface between the cam surfaces 61a,61b and the pivot pads 64. Furthermore, the pivot pads 64 may be configured, in some examples of the invention, to define a hole or drilling therethrough such that lubrication fluid can be transported through the pivot pads 64 to the contact area with the associated tooth element 52 or, on the contrary, from the tooth element 52 to the surface below the pivot pad 64. This can be observed in Figure 8, in which the internal lubrication passage 146 within the tooth element 52 continues through a hole, port, or drilling 166 provided in the pivot pad 64.

As shown in the illustrated examples, each of the lubrication passages 150 is a separate feature and extends from the rotating coupling 112 to the eccentric cam surface 61. In another example, it is envisaged that interconnecting passages may be provided between selected ones of the passages. For example, as shown in Figure 9, interconnecting passages 170 are shown extending between adjacent ones of the lubricating passages 150. This may be beneficial in the unlikely event that one of the main lubrication passages 150 becomes blocked with debris. It should be appreciated that Figure 9 is a schematic view such that the internal passages may be implemented in different ways.

Many modifications may be made to the specific examples described above without departing from the scope of the invention as defined in the accompanying claims. Features of one embodiment may also be used in other embodiments, either as an addition to such embodiment or as a replacement thereof.

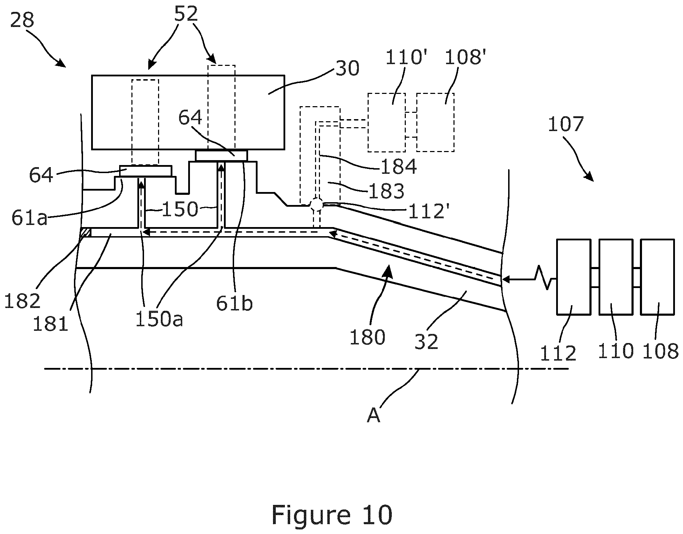

In the illustrated embodiments, the lubrication passages 150 have been described as being provided from a rotating coupling 112 that passes through the interior chamber of the output member 32 and which pass through the solid wall of the output member 32 in a radial direction so as to open out at a cam surface 61 provided on the output member 32. It should be noted that other configurations of lubrication passages 150 would be acceptable. One such example is shown in the schematic view in Figure 10, which has been simplified for the sake of clarity.

In Figure 10, a section view through the wall of the output member 32 can be seen, which shows the cam surfaces 61a,61b interfaced with the pivot pads 64 which are in turn engaged with the tooth elements 52 in the input member 30.

As in the previous example of the invention, lubrication passages 150 are provided that extend internally within the output member 32. Here, there is only one lubrication passage 150 shown in Figure 10 for each of the cam surfaces 61a,61b of the output member 32 shown for ease of view. Further pivot pads not shown in Figure 10 may also be supplied by lubrication passages and respective outlet ports.

The lubrication passages 150 extend in the radial direction, in the illustrated embodiment, such that they are perpendicular to the rotational axis A. However, the precise orientation of the lubrication passages 150 shown here is not essential.

Radially inner ends 150a of the lubrication passages 150 are fed by a feed passage 180. The feed passage 180 extends along the wall of the output member generally, and in this case predominantly, in the axial direction. The lubrication passages 150 may therefore be considered to be branches of the feed passage 180. Although a single feed passage 180 is shown in the illustrated embodiment, it should be noted that more than one feed passage 180 may be provided. The feed passage 180 may be configured in any suitable way to feed lubrication fluid to the radial lubrication passages 150. For example, further branch passages may extend off the feed passage 180 to connect to other lubrication passages 150. For ease of manufacturing, a passage extension 181 may be provided which extends from the feed passage 180 in the same direction and terminates at the end of the output member 32. The passage extension 181 would be useful during manufacture to enable the feed passage 180 to be drilled through the output member 32 from an external surface. An end plug 182 may be fitted to prevent lubrication fluid leaking from the feed passage 180 along the passage extension.

The transmission 28 is configured such that the or each feed passage 180 is fed with lubrication fluid in a similar manner as described with reference to the previous examples. So, the or each feed passage 180 is configured to connect to a suitable fluid supply system 107. This may include a fluid reservoir 108, a fluid pump 110, and a rotary coupling 112 to transition the fluid supply from a stationary reference frame of the tank 108 and pump 110, to a rotational reference frame of the input member 30.

As a variation on this illustrated example, the feed passage 180 may be supplied with lubrication fluid in an alternative manner. In this respect, Figure 10 illustrates how the lubrication fluid may be supplied to the feed passage 190 through a portion of transmission housing 183, which is shown in dashed lines. In this example, reservoir 108' and pump 110' are configured to distribute lubricating fluid through the transmission housing portion 183 through a distribution line 184 provided in the transmission housing portion 183. It will be appreciated that the transmission housing portion 183 is stationary with respect to the output member 32, and so a rotary coupling 112' is provided to interface between the nonrotating transmission housing portion 183 and the rotating output member 32. The rotating coupling 112' may be in the form of a sliding interface or joint between the transmission housing portion 183 and the output member 32.

In the above discussion, the speed increasing transmission has been described as used in a wind turbine powertrain as a means of increasing the rotational speed of the main shaft to a speed suitable for an input shaft of an electrical generator.

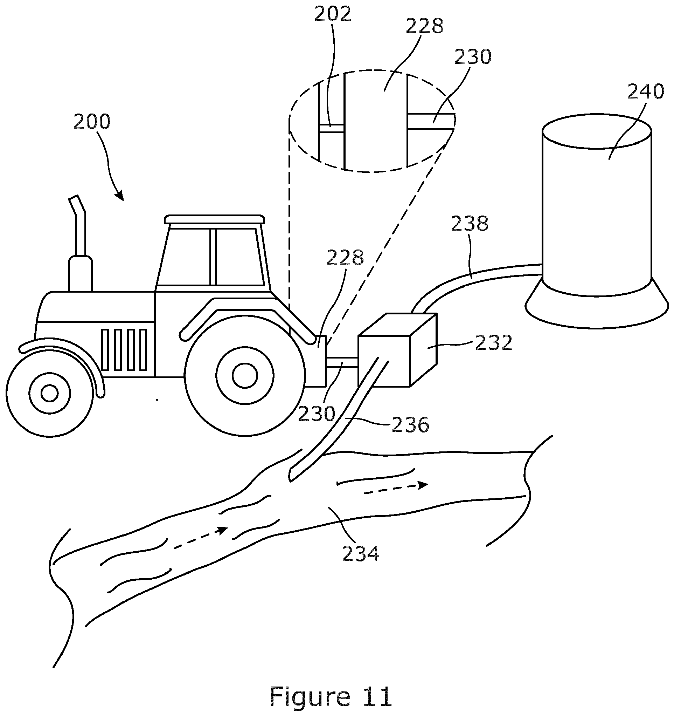

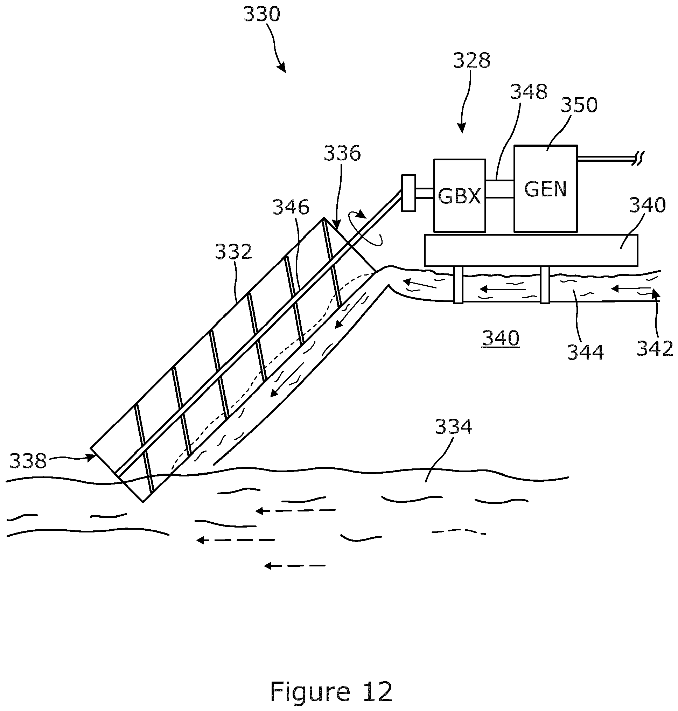

The skilled person would understand that this is not the only application for such a transmission. Figures 11 and 12 illustrate two further applications, by way of example, within which the transmission may be used. In the following discussion, the internal details and functionality of the transmission can be assumed to be the same as described above.

With reference firstly to Figure 11, the transmission of the invention may be used in agricultural gearbox applications. For example, here an agricultural machine such as a tractor 200 provides a power take off coupling 202, which is a rotating shaft that is driven by the engine of the tractor 200, as is known in the art. The power takeoff coupling 202 may typically be driven at between 200 and 600 rpm, and is dependent on engine speed. For some agricultural applications, that rotational speed may be sufficient. However, for other applications a higher rotational speed may be required. Therefore, in Figure 11 a transmission 228 according to the invention is provided that receives as a drive input the power take off coupling 202 from the tractor 200. Here, the transmission 228 is shown attached to the tractor 200, but this is not essential, particularly if mobility is not required. The transmission 228 converts the relatively high torque and low speed drive input from the power take off coupling 202 to a higher speed but lower torque drive input 230 to a hydraulic pump 232. As an example, the rated running speed of the pump may be between 1200 and 2000 rpm. The hydraulic pump 232 may be a gear pump or any other suitable form of pump. In the illustrated application, the pump 232 is used to draw water from a nearby stream 234 through an input pipe 236 and pump the water through an outlet pipe 238 to a water storage container 240.

Beneficially, the technical advantages of the transmission of the invention such as low backlash and smooth operation minimises further vibration on the power take off coupling 202 and reduces operational noise for the operator of the machinery.

A further application is shown in Figure 12 in which a transmission 328 according to the invention is integrated into a hydrodynamic power generation system 330.

The generation system 330 includes a so-called Archimedes screw device 332 arranged at an inclined angle with respect to a flowing body of water such as a river or stream 334. An inlet 336 of the screw device 332 is arranged at an upper end, and a discharge or outlet 338 is arranged at the lower end thereof. The general form of screw device is conventional.

A suitable structure 340 is provided to create a feed channel 342 through which is fed a flow of water 344 to the inlet 336 of the screw device 332 which causes it to turn, as is well known. The structure 340 may be an earth or concrete bank, for example, but other structures are possible.

The screw device 332 comprises a drive shaft 346 which supports the screw device 332 on suitable bearings (not shown) and which provides an output drive. The drive shaft 346 is connected to the gearbox or transmission 328 in accordance with the invention. Since the screw device 332 only has a low rate of rotation, for example 0.2 to 1Hz, the transmission 328 provides a speed increasing function. As such, the transmission 328 includes an output drive shaft 348 which is coupled to an electrical generator 350.

It will be appreciated that the compact arrangement of the transmission according to the invention, and other advantageous characteristics such as low noise and low backlash, make it beneficial for such applications where installation space is at a premium. In addition, the low backlash and smooth operations reduces wear on the other components included in the powertrain.

In the examples of the invention discussed above and shown in the accompanying Figures, the transmission has been described as a speed increasing transmission wherein the input member 30 receives rotational drive from the main shaft of the wind turbine at a relatively low speed, and the output member 32 provides a higher rotational output speed to the generator 26. Although this is the application currently envisaged for the transmission, which will be technically advantageous for applications outside wind turbines, as is evidenced by Figure 11 and 12, it should be noted here that the transmission of the invention could also be 'back driven', meaning that it could be used as a speed reducer transmission. In such a situation, therefore, the radially inner output member 32 as described above may receive rotational drive from a prime mover, e.g. such as an internal combustion engine or electric motor, having a relatively high rotational speed and relatively low torque, whereas the radially outer input member 30 as described above would then provide the onwards drive to a load, for example a vehicle drive train or hoisting system, having a lower output speed but higher torque. In this context, therefore, the input member 30 of the transmission may be considered more generically as a first drive member whereas the output member 32 may be considered more generically as a second drive member. In either mode of operation, i.e. when operated as a speed increasing transmission or a speed reducing transmission, it is the case that rotational driven movement of the input member 30 causes radial movement of the tooth elements 52. In contrast, when the output member 32 is driven, it is the rotation of the output member 32 that causes radial movement of the tooth elements 52 which, in turn, means that the input member 30 also rotates. However, in this operational mode, the transmission may also be back-driven meaning that the rotational movement of the input member 30 causes radial movement of the tooth elements. Therefore, it can be considered that rotational movement of the input member 30 is associated with, or linked to, radial movement of the tooth elements 52.

This invention is most preferred in mainly one-direction applications, which will often be high torque applications, for example the wind turbine applications discussed above. However, the present invention may also find use in other areas where it is desired to have high power density, high torque density, large hollow shaft ratio, advantageous damping behaviour, high rigidity, zero or reduced play or backlash, high synchronization, or in general a compact design. Even for two-direction applications, such as robotics, machine tools, industrial drive-trains, servo-motor-torque-speed-downs, packaging machines and milling machines the present invention will also be an improvement over the known prior art.

In the above discussion, the transmission comprises a lubrication system that feeds lubrication fluid to specific locations and components within the transmission as this tends to be an efficient way to achieve sufficient lubricity whilst reducing fluid requirement. Since lubrication fluid is delivered to the points of need, the lubrication system of the invention can be considered to be a "dry sump" system which does not have a fluid collector/sump/bath within which lubrication fluid can collect and through which components of the transmission may pass, or in which components may at least partly be immersed, in order to aid lubrication. However, it is envisaged that in some examples of the invention the transmission may further be configured to include a sump or oil bath. This can serve as a fluid collector for lubrication fluid to be fed back to the main fluid tank, and/or it can also be configured such that various components can be exposed to the fluid in the sump during rotation, for example the input/output members and the tooth elements.

In the examples of the invention discussed above, various features of tooth elements have been described and shown. In general, the tooth elements comprise a cylindrical tooth body which transitions to a tapered tooth tip or head region which terminates at a tip or point. The tooth body in the illustrated examples are cylindrical and match the tooth apertures/guides so they can slide relative thereto. Although the tooth elements and apertures/guides are shown as having a circular cross section, other cross sections are acceptable in principle.

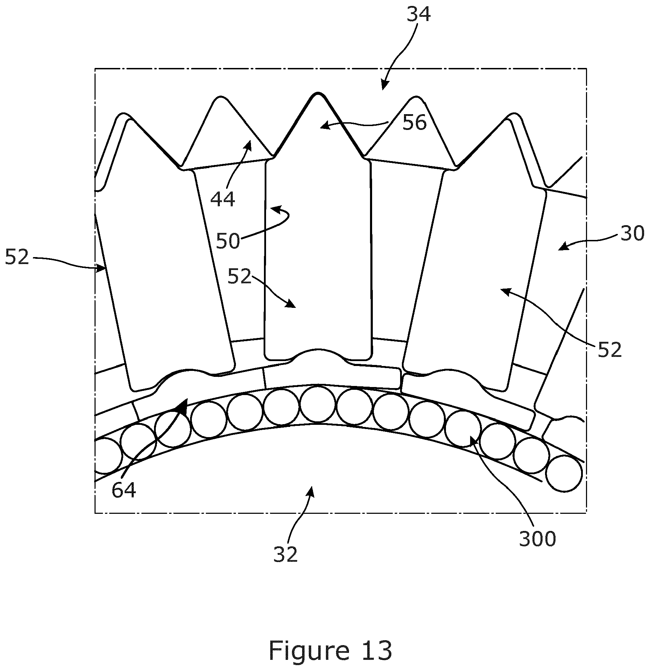

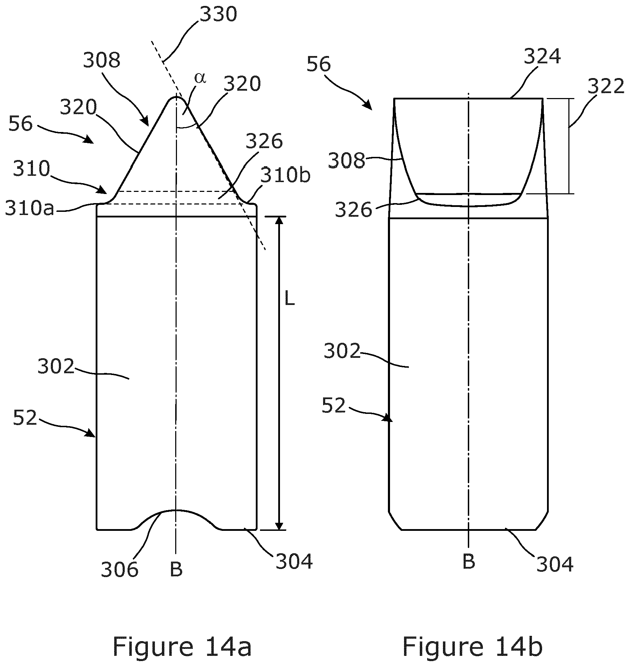

Another form of tooth element is shown in Figure 13 and Figures 14a and 14b. The same reference numerals will be used in these Figures to refer to features in common and/or equivalent with the previously illustrated examples.

In Figure 13, three tooth elements 52 are shown in their respective apertures 50 of the input member 30. The outer gear ring 34 is also shown in part, as is the output member 32, together with the pivot pads 64 and a bearing layer 300 that is intermediate the outer surface of the output member 32 and the pivot pads 64. It will be appreciated that the tooth member 52 shown in the centre of the image is in a 'top dead centre' position relative to its respective gear tooth section 44, whereas the other tooth elements 52 are in in slightly laterally shifted positions.

With reference also to Figure 14a and 14b, it will be apparent that the tip region 56 is shaped differently to the previous examples.

The tooth element 52 comprises a tooth body 302 having a tooth base 304 which is configured for engagement with an adjacent pivot pad 64 (not shown in Figs 14a/b) by virtue of a recess 306 defined therein.

The tooth tip region 56 is adjacent the tooth body 302 distal from the tooth base 304. The tooth tip region 56 is defined by a flank section 308 that is demarked from the tooth body 302 by a shoulder 310. As seen in Figure 14a, there is provided a left shoulder 310a and a right shoulder 310b.

The shoulders 310 are intermediate the top of the tooth body 302 and the flank section 308 of the tip region 56. The shoulders 310 and flank section 308 together form the tooth tip region 56 of the tooth element 52.

Over a body length L along the longitudinal axis B of the tooth element 52, the tooth body 302 has a substantially constant cross-section, which is circular in this example, although this need not be the case and other cross sectional profiles are acceptable. Where the cross section is not circular, that cross section profile may be substantially constant along the longitudinal length of the tooth body 302. The tooth body 302 is in contact with the tooth aperture 50 or "guide" of the input member 30 over the length of the tooth body 302 and so forces can be transmitted between the tooth element 52 and the respective aperture via the contact surfaces, contact lines or contact points.

The flank section 308 comprises tooth flanks 320, which can engage with the corresponding surfaces of the gear tooth sections 44 on the outer gear ring 34.

Figure 14b shows the tooth element 52 when viewed perpendicularly from a tooth flank 320. It will be apparent that the tooth flank 320 is a predominantly flat surface that extends from the tip of the tooth towards the tooth body 302, and particularly the shoulder 312.

The tooth flanks 320 comprise a straight substantially planar section, labelled as 322, and first/second transition sections 324, 326. The substantially planar section 322 may have some curvature, although it is shown as planar in the figures. The first transition section 324 is located towards the tip end of the flank 320 and extends towards the tip to provide a somewhat rounded end rather than a sharp tip shape, thereby reducing stress concentrations. The second transition section 326 is located at the other end of the flank 320 and merges into the shoulder 310.

The flanks 320 define an angle with respect to the tooth axis B. As shown, the angle α of each flank is around 20 degrees, although this is just exemplary and other angles would be acceptable. As a result, the cone angle of the tooth tip is approximately 40 degrees. Currently it is envisaged that cone angles between 30 and 60 degrees would be acceptable, by way of non-limiting example.

The presence of the shoulders 310 mean that a step is formed between the upper end of the tooth body 302 and the flanks 320. As such, a flank line 331 corresponding to a medial tangent to the tooth flank 320 as seen in Figure 14a intersects a volume of the tooth body 302.

The shoulder 310 provides a curved, rounded or concave transition between the top of the tooth body 302 and the angled flank 320. As can be seen, the axially lower end of the shoulder 312 is horizontal, from which point the shoulder 310 curves upwardly through the lower transition section 326 to blend into the flank 320. The curvature of the transition section 326 may be radiussed. The shoulder 312 and transition section 326 may be machined more finely than the tooth flank 320.

An advantage of the provision of the shoulders 310 with respect to the tooth flanks 320 may be that splash losses in the contact of the tooth element with the gear profile may be reduced. The surface area of the tooth flank may in particular be reduced by the shoulders 310, whereby lubricating oil needs to be displaced from a smaller surface.

The tooth elements of the invention may be any suitable material, but currently it is envisaged that a suitable grade of stainless steel is most appropriate in high load applications. However, in other applications materials other than steel may be appropriate such as plastics. Similar considerations apply for the material of the outer ring gear, the input member and the output member. At least a part of the tooth element is configured to be flexurally rigid. The term "flexurally rigid" should in this case be typically understood technically to mean that bending deformations of the teeth are so small due to the rigidity of the material of the teeth that they are at least substantially unimportant for the kinematics of the gearing. Flexurally rigid teeth comprise in particular teeth made of a metal alloy, in particular steel, or a titanium alloy, a nickel alloy or any other alloys. Furthermore, flexurally rigid teeth of plastics may also be provided, in particular in transmissions in which the outer gear ring and the input/output member are also made of plastics. Metal/alloy components offer the advantage that they are extremely torsionally rigid and withstand high loads. Gearings of plastics offer the advantage that they have a low weight. The term "flexurally rigid" means in particular a flexural rigidity about a transverse axis of the tooth. This means in particular, that when the tooth is viewed as a rod from a tooth base to a tooth flank area, a flexural rigidity is given at least substantially excluding bending deformations between the tooth flank area and the tooth base. Due to the flexural rigidity, a very high resistance to load and torsional rigidity of the gearing are achieved.

## Claims

1. A transmission comprising:
a fixed gear ring (34),
a first drive member (30) rotationally supported within the fixed gear ring, the first drive member defining a plurality of radially arranged apertures (50) each of which accommodates a tooth element (52), each tooth element (52) having a tooth tip (56) and
a tooth base (58) that are opposed along a tooth axis, the first drive member (30) further comprising a radially outer face (29) and a radially inner face (31), wherein the tooth tips of the tooth elements (52) engage a corresponding tooth surface (44) defined by the fixed gear ring (34),
a second drive member (32) which is rotationally supported within the first drive member (30), the second drive member (32) defining at least one cam profile (61) which engages each of the plurality of tooth elements,
wherein the transmission further comprises one or more fluid distribution passages (150) that extend through a wall of the second drive member (32) and which are configured to distribute lubricating fluid to the cam profile (61) of the second drive member (32).

2. The transmission of Claim 1, further comprising a rotary coupling (112,112') configured to provide a flow of lubricating fluid from a fluid supply system (107) in a stationary reference frame, to the output member (32) in a rotating reference frame.

3. The transmission of Claim 2, wherein the rotary coupling (112,112') comprises a first rotary coupling portion (112a) in a stationary reference frame, and a second rotary coupling portion (112b) in a rotating reference frame.

4. The transmission of Claim 3, wherein the one or more fluid distribution passages (150) are coupled to the second rotary coupling portion (112b).

5. The transmission of Claim 4, wherein the one or more fluid distribution passages (150) are coupled to the second rotary coupling portion (112b) by respective flexible hoses.

6. The transmission of Claim 2, wherein the rotary coupling (112,112') is provided at least in part by a transmission housing portion (183).

7. The transmission of Claim 6, wherein the rotary coupling (112,112') comprises a sliding joint configured to transfer fluid between the transmission housing portion (183) and the second drive member (32).

8. The transmission of any one of the preceding claims, wherein the one or more fluid distribution passages (150) are defined at least in part by drillings provided through the wall of the second drive member (32).

9. The transmission of any one of the preceding claims, wherein the one or more distribution passages (150) define a plurality of outlet ports (164) circumferentially spaced about the cam profile (61) of the second drive member (32).

10. The transmission of Claim 9, wherein the plurality of outlet ports (164) provide at least two ports per 90 degrees of arc about the rotational axis of the output member.

11. The transmission of any one of the preceding claims, wherein the plurality of tooth elements (52) engage the cam profile (61) of the second drive member (32) by way of one or more bearing components, and wherein the one or more fluid distribution passages (150) deliver lubrication fluid to the one or more bearing components.

12. The transmission of Claim 11, wherein the one or more bearing components comprise a plurality of pivot pads (64), each being associated with a respective one of the plurality of tooth elements (52).

13. The transmission of Claim 12, wherein one or more of the plurality of pivot pads (64) comprise a lubrication hole (166) defined therein configured to allow lubrication fluid to pass through said pivot pad.

14. The transmission of any one of the preceding claims, wherein the at least one cam profile (61) comprises a first cam profile (61a) and a second cam profile (61b) that are axially spaced along the second drive member (32).

15. A wind turbine (10) including a tower (12) on which is mounted a nacelle (14) that supports a rotatable hub (16), wherein the rotatable hub is coupled to a transmission in accordance with any one of the preceding claims.
